# FASCICULE DE BREVET EUROPEEN

(11) **EP 1 322 878 B1**
(45) Date de publication et mention de la délivrance du brevet: **07.12.2005**
(21) Numéro de dépôt: 01976354.9
(22) Date de dépôt: 03.10.2001
(51) Int. Cl.: F16J 15/08

(54) **JOINT DE CULASSE AVEC UN STOPPEUR A EPAISSEUR VARIABLE ET PROCEDE DE REALISATION ET DE FIXATION DUDIT STOPPEUR**
ZYLINDERKOPFDICHTUNG MIT VARIIERENDER BEGRENZUNGSRINGDICKE UND VERFAHREN ZUR BEFESTIGUNG DES BEGRENZUNGSRINGES
CYLINDER HEAD GASKET COMPRISING STOPPER WITH VARIABLE THICKNESS AND METHOD FOR MAKING AND FIXING SAME

(30) Priorité: 04.10.2000 FR 0012669
(43) Date de publication de la demande: 02.07.2003
(73) Titulaire: MEILLOR S.A., F-87140 Nantiat (FR)
(72) Inventeur: PEPIN, Frédéric, Jean-Michel, F-87100 Limoges (FR)
(74) Mandataire: Ripper, Monika Sigrid
(86) Numéro de dépôt international: PCT/FR2001/003048
(87) Numéro de publication internationale: WO 2002/029293

(56) Documents cités:
- EP-A- 0 809 051
- DE-A- 19 808 362
- US-A- 5 542 683
- US-A- 5 713 580

## Description

La présente invention se rapporte à un joint, notamment un joint de culasse, équipé d'un stoppeur à épaisseur variable, disposé bord à bord, ainsi qu'à un procédé de réalisation et de fixation dudit stoppeur. La présente invention est plus particulièrement adaptée au joint de culasse multifeuilles comprenant au moins deux tôles dont l'une est nervurée.

De façon connue, le joint de culasse est interposé entre le bloc moteur et la culasse et doit assurer l'étanchéité, d'une part, entre ces deux éléments et, d'autre part, entre les volumes traversant cette interface, comme autour des chambres de combustion, des trous de passage des fluides, eau ou huile, et des trous de passage des vis de fixation.

Pour améliorer le rendement des nouveaux moteurs, les pressions à l'intérieur des chambres de combustion sont de plus en plus élevées ce qui engendre des contraintes beaucoup plus importantes au niveau des joints de culasse.

Ainsi, pour assurer une meilleure étanchéité, les joints de culasse comportent des nervures périphériques, notamment autour des chambres de combustion. Selon un mode de réalisation répandu, le joint de culasse comprend donc au moins deux tôles superposées dont une est nervurée.

En complément, au niveau du bord des ouvertures de passage, en particulier des ouvertures des chambres de combustion, une cale dite stoppeur, est prévue afin d'assurer la fonction de limiteur de compression pour les nervures. Cette cale autorise une forte pression au niveau des chambres de combustion, le joint de culasse étant fortement comprimé entre le bloc moteur et la culasse par les vis de fixation sans toutefois que les nervures soient aplaties.

Selon un premier mode de réalisation le stoppeur est fixé par soudage sur la face de la tôle plane en regard de la tôle nervurée. De nombreuses techniques de soudage sont décrites dans l'art antérieur, notamment dans la demande de brevet FR 2 803 893 A1 au nom du déposant.

Une autre solution consiste à réaliser une surépaisseur sur la face de la tôle plane en regard de la tôle nervurée, par frittage par exemple.

Dans les deux cas, le stoppeur est disposé contre l'une des faces de la tôle à laquelle il est lié.

Même si la fonction anti-écrasement est réalisée, les joints de culasse de l'art antérieur ne donnent pas pleinement satisfaction car les procédés de réalisation, notamment ceux du stoppeur, sont relativement complexes et longs à mettre en oeuvre. Par ailleurs, en utilisant ces procédés, il est difficile de faire varier le profil du stoppeur.

Aussi, la présente invention vise à pallier les inconvénients de l'art antérieur en proposant un nouveau joint de culasse ainsi qu'un nouveau procédé de réalisation dudit joint, notamment en ce qui concerne l'étape de réalisation et de fixation du stoppeur, relativement simple et rapide à mettre en oeuvre, qui autorise éventuellement une variation du profil du stoppeur le long de sa circonférence, si bien que le joint de culasse ainsi obtenu procure une meilleure étanchéité.

A cet effet, l'invention a pour objet un joint de culasse avec au moins un orifice correspondant à une chambre de combustion, comprenant d'une part, un empilage d'au moins une tôle comportant une nervure ménagée autour de l'orifice correspondant à la chambre de combustion, et d'au moins une tôle servant de cale, et d'autre part, une cale, appelée stoppeur, prévue pour limiter la compression de la nervure, ledit stoppeur et ladite tôle servant de cale étant disposés bord à bord et comprenant des moyens de liaison, caractérisé en ce que lesdits moyens de liaison sont obtenus par déformation plastique, plus précisément par expansion radiale dudit stoppeur, ce dernier ayant, avant déformation, un diamètre extérieur égal ou légèrement inférieur au diamètre intérieur de la tôle servant de cale- et étant disposé bord à bord par rapport à ladite tôle.

Selon une autre caractéristique de l'invention, les moyens de liaison comprennent deux bourrelets au niveau du stoppeur, de chaque côté de la tôle, coinçant ainsi ladite tôle.

De préférence, le stoppeur a une épaisseur qui varie le long de sa circonférence, avec une épaisseur réduite dans les zones situées angulairement au droit des orifices de passage et une épaisseur plus importante dans les zones intermédiaires.

Dans ce cas, le stoppeur comprend des moyens d'indexage de manière à le positionner angulairement par rapport au reste du joint, et notamment par rapport aux orifices de passage.

Selon un mode de réalisation préféré, le stoppeur comprend un corps et, sur au moins une des faces du corps en regard de la tôle nervurée, une nervure en saillie.

Avantageusement, la nervure en saillie a un profil symétrique selon un axe vertical de la section du stoppeur.

L'invention propose également un procédé de fixation du stoppeur utilisé dans un joint de culasse précédemment défini, caractérisé en ce que la liaison entre le stoppeur et la tôle servant de cale est obtenue par déformation plastique, plus précisément par expansion radiale dudit stoppeur, ce dernier ayant, avant déformation, un diamètre extérieur égal ou légèrement inférieur au diamètre intérieur de la tôle et étant disposé bord à bord par rapport à cette dernière.

Selon une autre caractéristique, la fixation du stoppeur sur la tôle servant de cale est obtenue non seulement par expansion radiale mais également grâce à la formation de deux bourrelets au niveau du stoppeur, de chaque côté de la tôle, coincant ainsi ladite tôle.

De préférence, l'expansion radiale nécessaire pour la fixation du stoppeur est produite au moment de la réalisation du profil souhaité du stoppeur, obtenu par déformation plastique, notamment par estampage.

D'autres caractéristiques et avantages ressortiront de la description qui va suivre du dispositif de l'invention, description donnée à titre d'exemple uniquement, en regard des dessins annexés sur lesquels:
- la figure 1 est une vue en coupe dans le plan du stoppeur d'un joint de culasse selon l'invention,
- la figure 2 est un schéma illustrant les variations d'épaisseur du stoppeur,
- la figure 3A est une coupe transversale selon la ligne A-A du joint de culasse de la figure 1,
- la figure 3B est une coupe transversale selon la ligne B-B du joint de culasse de la figure 1,
- la figure 4 est une vue en coupe dans le plan du stoppeur d'un joint de culasse selon une variante de l'invention,
- la figure 5A est une vue en coupe transversale selon la ligne A-A du joint de culasse de la figure 4,
- la figure 5B est une vue en coupe transversale selon la ligne B-B du joint de culasse de la figure 4,
- les figures 6 à 8 des vues en coupe illustrant des exemples de profils de stoppeur, et
- les figures 9 à 13 des vues en coupe montrant des exemples de joints de culasse.

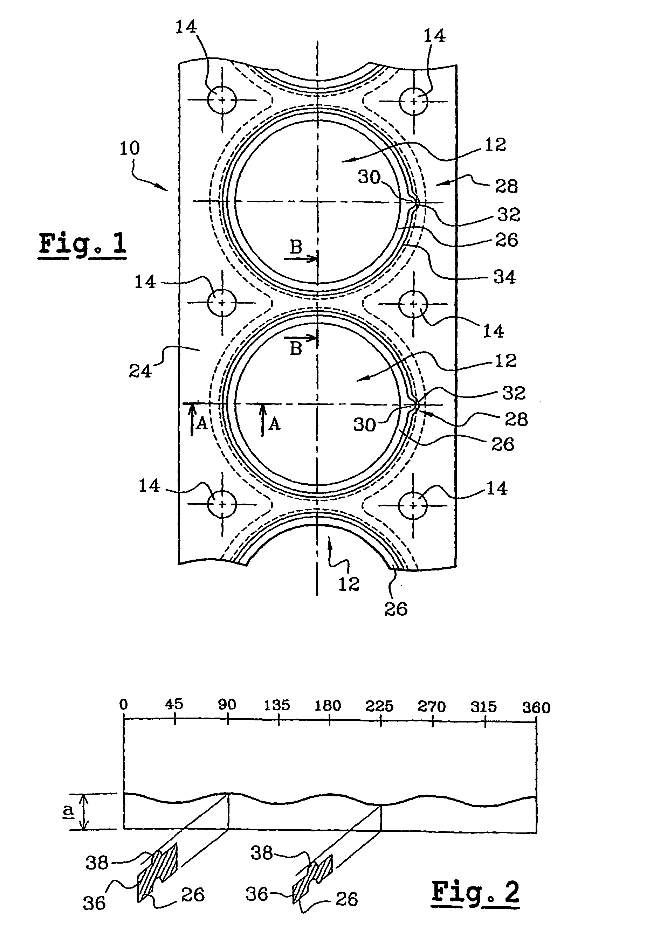

Sur la figure 1, on a représenté une partie d'un joint de culasse 10 qui comprend au moins une ouverture 12 prévue pour le passage d'une chambre de combustion, de dimensions sensiblement identiques à cette dernière et des orifices de passage 14 susceptible de laisser passer les vis de fixation assurant la liaison de la culasse sur le bloc moteur non représentés.

Dans le cas de joint de culasse multifeuilles, ce dernier comprend au moins deux tôles, une nervurée et l'autre sensiblement plane.

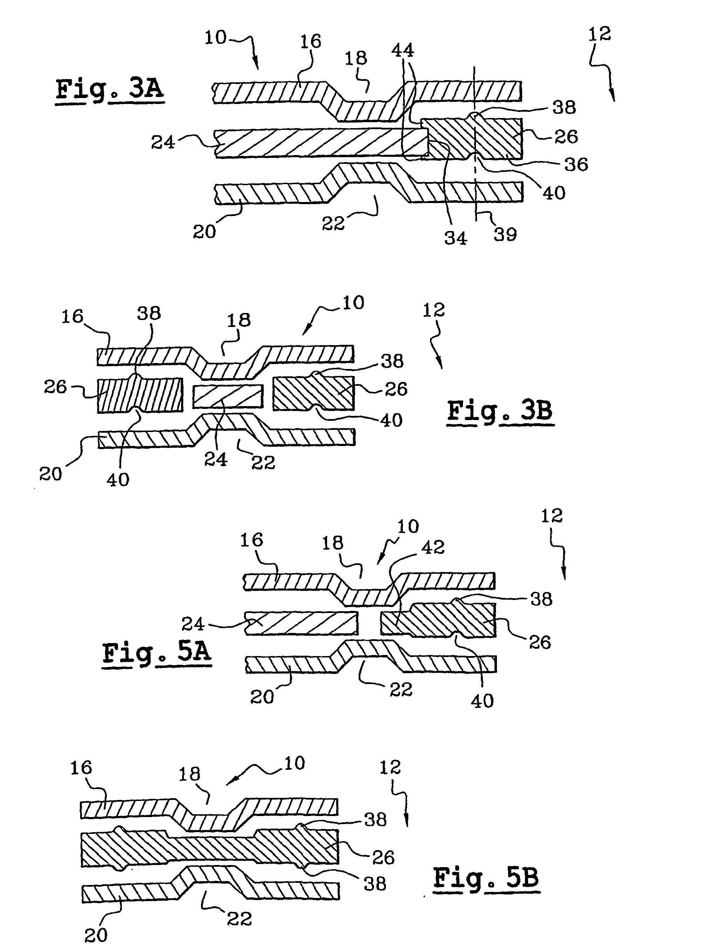

De préférence, comme illustré sur les figures 3A et 3B, le joint de culasse comprend une première tôle 16 avec une nervure 18, une deuxième tôle 20 avec une nervure 22 et une troisième tôle 24, sensiblement plane, servant de cale, disposée entre les deux premières 16 et 20, les deux nervures 18 et 22 venant en contact contre la troisième tôle 24.

Les tôles 16 et 20 munies respectivement des nervures 18 et 22 permettent de parfaire l'étanchéité, en particulier face aux mouvements de l'assemblage culasse-bloc moteur.

En complément, au niveau du bord de chaque orifice correspondant à une chambre de combustion, une cale 26 dite stoppeur, est prévue afin d'assurer la fonction de limiteur de compression pour les nervures 18, 20. Cette cale autorise une forte pression au niveau des chambres de combustion, le joint de culasse étant fortement comprimé entre le bloc moteur et la culasse par les vis de fixation sans toutefois que les nervures soient aplaties.

Contrairement aux joints de culasse de l'art antérieur, selon l'invention, le stoppeur 26 n'est pas disposé contre l'une des faces de la tôle 24 à laquelle il est lié mais bord à bord avec ladite tôle 24.

Cette disposition procure de nombreux avantages, notamment en ce qui concerne la réalisation et la fixation du stoppeur 26 sur la tôle 24 qui seront détaillés ultérieurement.

Selon une autre caractéristique de l'invention, l'épaisseur a du stoppeur varie le long de la circonférence comme illustré sur la figure 2.

Cette variation d'épaisseur permet de compenser les variations de pression tout autour de la chambre de combustion engendrées par les moyens de fixations de la culasse sur le bloc moteur, la pression étant beaucoup plus importante dans les zones proches des orifices de passage 14 que dans les zones éloignées desdits orifices 14.

Selon un mode de réalisation préféré, le stoppeur a une épaisseur a qui varie selon une sinusoïde avec une épaisseur réduite dans les zones situées angulairement au droit des orifices de passage 14, à 45 °, 135°, 225° et 315° et une épaisseur plus importante dans les zones intermédiaires, à 0°, 90°, 180°, 270°.

Avantageusement, le stoppeur 26 comprend des moyens 28 d'indexage de manière à le positionner angulairement par rapport au reste du joint et notamment par rapport aux orifices de passage 14.

Dans le cas où les stoppeurs de chaque chambre de combustion sont indépendants et ont chacun une forme d'anneau comme illustré par la figure 1, chaque stoppeur 26 comprend un élément en saillie 30, appelé ergot, ménagé à sa périphérie, susceptible de se loger dans une forme en creux 32 ménagée sur le bord 34 de la tôle 24.

Dans le cas où les stoppeurs des chambres de combustion sont reliés les uns aux autres par des isthmes comme illustré par les figures 4 et 5B, les stoppeurs 26 remplissent eux-mêmes la fonction d'indexage.

Selon une autre caractéristique de l'invention, le stoppeur 26 comprend un corps 36 et, sur au moins une des faces du corps en regard de la tôle nervurée 16 ou 20, une nervure 38 en saillie. De préférence, cette nervure 38 a un profil symétrique selon un axe vertical 39 de la section, par exemple en demi-cercle pour assurer une meilleur étanchéité.

Selon les cas, la variation d'épaisseur du stoppeur 26 est obtenue, soit en faisant varier l'épaisseur du corps 36, soit en faisant varier la hauteur de la nervure 38.

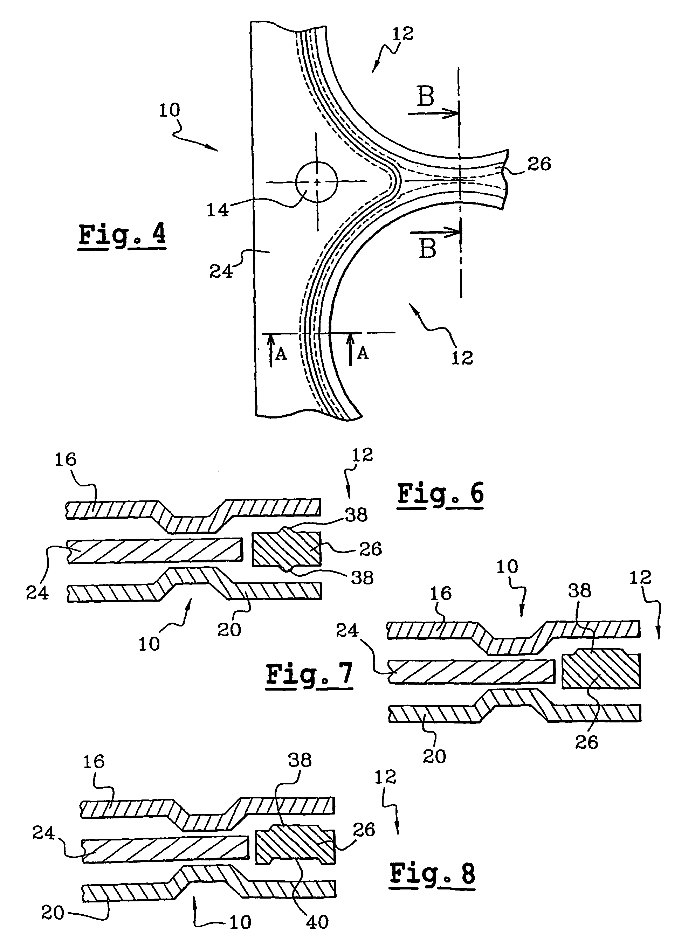

En variante, le stoppeur peut comprendre sur chaque face, une nervure en saillie 38 comme illustré par les figures 5B et 6, une nervure en saillie 38 sur l'une des faces et une nervure en creux 40 sur la face opposée comme illustré par les figures 3A, 3B, 5A et 8, ou une seule nervure en saillie 38 sur l'une des faces comme illustré par la figure 7.

De même, on peut envisager d'autre profil de nervure tel que trapézoïdal par exemple, comme illustré par les figures 7 et 8.

En fonction des cas, le stoppeur peut comprendre une extension 42 qui s'étend sur la périphérie extérieure du stoppeur de manière à venir en partie entre les deux nervures 18 et 22 des tôles extérieures 16, 20 comme illustré par la figure 5A, ou de manière à réunir deux stoppeurs 26 comme illustré par la figure 5B.

Selon l'invention, la liaison entre le stoppeur 26 et la tôle 24 est obtenue par déformation plastique, notamment par expansion radiale dudit stoppeur 26.

Sur l'ensemble des figures, on a représenté un espace entre le stoppeur 26 et la tôle 24 pour bien montrer que ces deux éléments sont distincts. Il est évident qu'en réalité ces deux éléments sont disposés l'un contre l'autre.

Selon un mode de réalisation préféré, le profil du stoppeur 26 est obtenu par déformation plastique, plus précisément par estampage, l'expansion radiale étant obtenue au cours de cette même opération.

Ainsi avant l'opération d'estampage, le stoppeur se présente sous la forme d'un anneau de section quelconque, par exemple rectangulaire ou carrée, et a un diamètre extérieur égal ou légèrement inférieur au diamètre intérieure de la tôle 24. Au cours de l'opération d'estampage, le stoppeur est comprimé entre deux matrices de manière à obtenir le profil souhaité. En même temps, on obtient également une expansion radiale du stoppeur qui engendre une augmentation du diamètre extérieur si bien que le stoppeur est fixé à la tôle 24.

Avantageusement dans le cas où la tôle 24 a une épaisseur inférieure au stoppeur, la fixation du stoppeur sur la tôle est obtenue non seulement par expansion radiale mais également grâce à la formation de deux bourrelets 44 au niveau du stoppeur, de chaque côté de la tôle 24, coinçant ainsi ladite tôle, comme illustré par la figure 3A.

Cette technique de fixation peut s'appliquer à tous les profils de stoppeur, du moment que ce dernier est disposé bord à bord avec la tôle 24 intermédiaire.

Le fait de séparer le stoppeur et la tôle permet de réduire au minimum les charges d'estampage pour obtenir le profil du stoppeur souhaité.

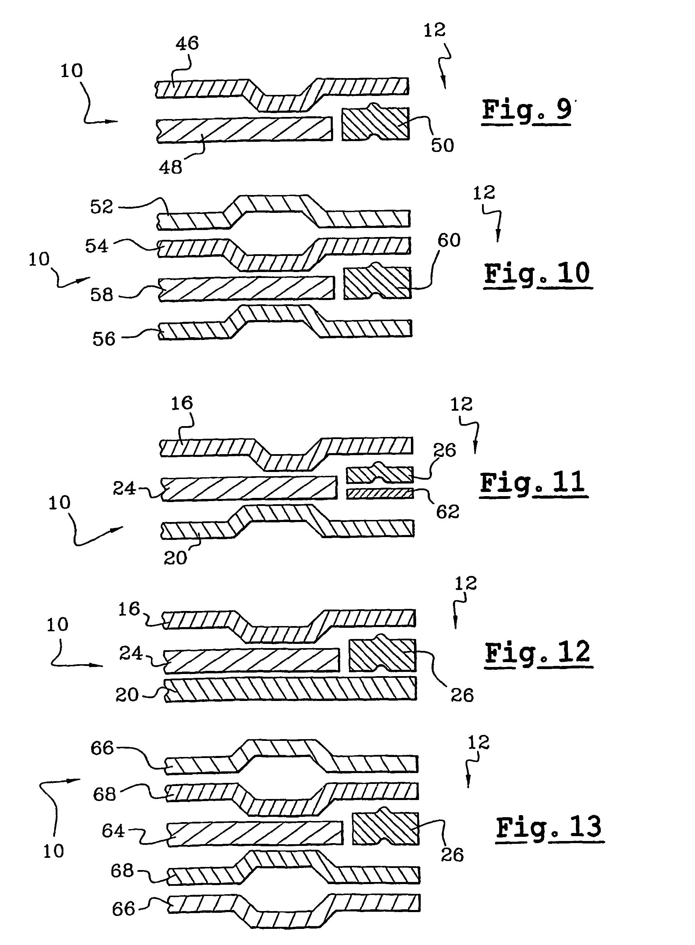

Sur les figures 9 à 13, on a représenté à titre d'exemples, différents joints de culasse.

Sur la figure 9, le joint comprend une seule tôle fonctionnelle nervurée 46, une seule tôle 48 sensiblement plane servant de cale et un stoppeur 50.

Sur la figure 10, le joint comprend deux tôles nervurées 52, 54 collées l'une contre l'autre, les nervures disposées en opposition, une autre tôle nervurée 56, une tôle 58 sensiblement plane servant de cale et un stoppeur 60, tous deux disposés entre les tôles 52 et 54 d'une part, et la tôle 56 d'autre part.

Sur la figure 11, le joint comprend les mêmes éléments que celui des figures 3A et 3B, une cale 62 sous forme d'anneau étant disposée sous le stoppeur 26.

Sur la figure 12, le joint comprend les mêmes éléments que celui des figures 3A et 3B, l'une des tôles nervurées, par exemple la 20, étant sensiblement plane

Sur la figure 13, le joint comprend de part et d'autre d'une tôle 64 sensiblement plane et d'un stoppeur 26, un couple de tôles nervurées 66, 68, collées l'une contre l'autre, les nervures disposées en opposition.

Quel que soit le joint de culasse, le stoppeur est disposé bord à bord avec la tôle servant de cale. De préférence, ce stoppeur a une épaisseur variable le long de sa circonférence.

## Revendications

1. Joint de culasse avec au moins un orifice (12) correspondant à une chambre de combustion, comprenant d'une part, un empilage d'au moins une tôle (16, 20) comportant une nervure (18, 22) ménagée autour dudit orifice, et d'au moins une tôle (24) servant de cale, et d'autre part, une cale, appelée stoppeur (26), prévue pour limiter la compression de la nervure (18), ledit stoppeur (26) et ladite tôle (24) servant de cale étant disposés bord à bord et comprenant des moyens de liaison, **caractérisé en ce que** lesdits moyens de liaison sont obtenus par déformation plastique, plus précisément par expansion radiale dudit stoppeur (26), ce dernier ayant, avant déformation, un diamètre extérieur égal ou légèrement inférieur au diamètre intérieur de la tôle (24) servant de cale et étant disposé bord à bord par rapport à ladite tôle.

2. Joint de culasse selon la revendication 1, **caractérisé en ce que** les moyens de liaison comprennent deux bourrelets (44) au niveau du stoppeur (26), de chaque côté de la tôle (24), coinçant ainsi ladite tôle.

3. Joint de culasse selon la revendication 1 ou 2, **caractérisé en ce que** le stoppeur (26) a une épaisseur qui varie le long de sa circonférence.

4. Joint de culasse selon la revendication 3, **caractérisé en ce que** le stoppeur (26) a une épaisseur qui varie avec une épaisseur réduite dans les zones situées angulairement au droit des orifices (14) de passage et une épaisseur plus importante dans les zones intermédiaires.

5. Joint de culasse selon la revendication 3 ou 4, **caractérisé en ce que** le stoppeur (26) comprend des moyens (28) d'indexage de manière à le positionner angulairement par rapport au reste du joint, et notamment par rapport aux orifices de passage (14).

6. Joint de culasse selon l'une quelconque des revendications 1 à 5, **caractérisé en ce que** le stoppeur (26) comprend un corps (36) et, sur au moins une des faces du corps en regard de la tôle nervurée (16, 20), une nervure (38) en saillie.

7. Joint de culasse selon la revendication 6, **caractérisé en ce que** la nervure (38) en saillie a un profil symétrique selon un axe vertical (39) de la section du stoppeur.

8. Joint de culasse selon la revendication 6 ou 7, **caractérisé en ce que** la variation d'épaisseur du stoppeur est obtenue en faisant varier l'épaisseur du corps (36).

9. Procédé de fixation du stoppeur (26) à la tôle (24) servant de cale dans un joint de culasse selon l'une quelconque des revendications 1 à 8, **caractérisé en ce que** la liaison entre le stoppeur (26) et la tôle (24) est obtenue par déformation plastique, plus précisément par expansion radiale dudit stoppeur (26), ce dernier ayant, avant déformation, un diamètre extérieur égal ou légèrement inférieur au diamètre intérieur de la tôle (24) servant de cale et étant disposé bord à bord par rapport à ladite tôle.

10. Procédé de fixation du stoppeur selon la revendication 9, **caractérisé en ce que** la fixation du stoppeur sur la tôle servant de cale est obtenue non seulement par expansion radiale mais également grâce à la formation de deux bourrelets (44) au niveau du stoppeur (26), de chaque côté de la tôle (24), coinçant ainsi ladite tôle.

11. Procédé de fixation du stoppeur selon la revendication 9 ou 10, **caractérisé en ce que** l'expansion radiale nécessaire pour la fixation du stoppeur est produite au moment de la réalisation du profil souhaité du stoppeur, obtenu par déformation plastique, notamment par estampage.

## Patentansprüche

1. Zylinderkopfdichtung mit mindestens einer einer Brennkammer entsprechenden Öffnung (12), die einerseits einen Stapel aus mindestens einem Blech (16, 20) mit einer um die Öffnung herum ausgebildeten Rippe (18, 22) und aus mindestens einem als Unterlegscheibe dienenden Blech (24) und andererseits eine Stopper (26) genannte Unterlegscheibe aufweist, die vorgesehen ist, um das Verpressen der Rippe (18) zu begrenzen, wobei der Stopper (26) und das als Unterlegscheibe dienende Blech (24) stumpf angeordnet sind und Verbindungsmittel aufweisen, **dadurch gekennzeichnet, dass** die Verbindungsmittel durch plastische Verformung erhalten werden, genauer durch radiale Ausdehnung des Stoppers (26), wobei letzterer vor der Verformung einen Außendurchmesser gleich dem oder geringfügig kleiner als der Innendurchmesser des als Unterlegscheibe dienenden Blechs (24) hat und bezüglich des Blechs stumpf angeordnet ist.

2. Zylinderkopfdichtung nach Anspruch 1, **dadurch gekennzeichnet, dass** die Verbindungsmittel in Höhe des Stoppers (26) auf jeder Seite des Blechs (24) zwei Wülste (44) aufweisen, wodurch das Blech eingeklemmt wird.

3. Zylinderkopfdichtung nach Anspruch 1 oder 2, **dadurch gekennzeichnet, dass** der Stopper (26) eine Dicke hat, die entlang seines Umfangs variiert.

4. Zylinderkopfdichtung nach Anspruch 3, **dadurch gekennzeichnet, dass** der Stopper (26) eine variierende Dicke hat, mit einer verringerten Dicke in den Zonen, die sich winkelmäßig vor den Durchgangsöffnungen (14) befinden, und mit einer stärkeren Dicke in den Zwischenzonen.

5. Zylinderkopfdichtung nach Anspruch 3 oder 4, **dadurch gekennzeichnet, dass** der Stopper (26) Indexierungsmittel (28) aufweist, um ihn winkelmäßig bezüglich des Rests der Dichtung, und insbesondere bezüglich der Durchgangsöffnungen (14), zu positionieren.

6. Zylinderkopfdichtung nach einem der Ansprüche 1 bis 5, **dadurch gekennzeichnet, dass** der Stopper (26) einen Körper (36) und auf mindestens einer der Seiten des Körpers gegenüber dem gerippten Blech (16, 20) eine vorstehende Rippe (38) aufweist.

7. Zylinderkopfdichtung nach Anspruch 6, **dadurch gekennzeichnet, dass** die vorstehende Rippe (38) ein gemäß einer senkrechten Achse (39) des Querschnitts des Stoppers symmetrisches Profil hat.

8. Zylinderkopfdichtung nach Anspruch 6 oder 7, **dadurch gekennzeichnet, dass** die Dickenänderung des Stoppers durch Veränderung der Dicke des Körpers (36) erhalten wird.

9. Verfahren zur Befestigung des Stoppers (26) am als Unterlegscheibe dienenden Blech (24) in einer Zylinderkopfdichtung nach einem der Ansprüche 1 bis 8, **dadurch gekennzeichnet, dass** die Verbindung zwischen dem Stopper (26) und dem Blech (24) durch plastische Verformung erhalten wird, genauer durch radiale Ausdehnung des Stoppers (26), wobei letzterer vor der Verformung einen Außendurchmesser gleich dem oder geringfügig kleiner als der Innendurchmesser des als Unterlegscheibe dienenden Blechs (24) hat und bezüglich des Blechs stumpf angeordnet ist.

10. Verfahren zur Befestigung des Stoppers nach Anspruch 9, **dadurch gekennzeichnet, dass** die Befestigung des Stoppers am als Unterlegscheibe dienenden Blech nicht nur durch radiale Ausdehnung, sondern auch aufgrund der Bildung von zwei Wülsten (44) in Höhe des Stoppers (26) auf beiden Seiten des Blechs (24) erhalten wird, wodurch das Blech eingeklemmt wird.

11. Verfahren zur Befestigung des Stoppers nach Anspruch 9 oder 10, **dadurch gekennzeichnet, dass** die für die Befestigung des Stoppers notwendige radiale Ausdehnung zum Zeitpunkt der Herstellung des gewünschten Profils des Stoppers erzeugt wird, das durch plastische Verformung, insbesondere durch Formstanzen, erhalten wird.

## Claims

1. Cylinder head gasket with at least one orifice (12) corresponding to a combustion chamber, comprising, on the one hand, a stack of at least one plate (16, 20) comprising a rib (18, 22) formed around the said orifice, and at least one plate (24) serving as a packing piece and, on the other hand, a packing piece, called a stopper (26), provided in order to limit the compression of the rib (18), the said stopper (26) and the said plate (24) serving as a packing piece being disposed edge to edge and comprising connecting means, **characterized in that** the said connecting means are obtained by plastic deformation, more precisely by radial expansion of the said stopper (26), the latter having, before deformation, an outer diameter equal to or slightly less than the internal diameter of the plate (24) serving as a packing piece and being disposed edge to edge with respect to the said plate.

2. Cylinder head gasket according to Claim 1, **characterized in that** the connecting means comprise two protrusions (44) at the level of the stopper (26), on each side of the plate (24), thus jamming the said plate.

3. Cylinder head gasket according to Claim 1 or 2, **characterized in that** the stopper (26) has a thickness which varies along its circumference.

4. Cylinder head gasket according to Claim 3, **characterized in that** the stopper (26) has a thickness which varies with a small thickness in the zones situated in angular alignment with passage orifices (14) and a greater thickness in the intermediate zones.

5. Cylinder head gasket according to Claim 3 or 4, **characterized in that** the stopper (26) comprises positioning means (28) in order to position it angularly with respect to the rest of the gasket, and in particular with respect to the passage orifices (14).

6. Cylinder head gasket according to any one of Claims 1 to 5, **characterized in that** the stopper (26) comprises a body (36) and a protruding rib (38) on at least one of the faces of the body facing the ribbed plate (16, 20).

7. Cylinder head gasket according to Claim 6, **characterized in that** the protruding rib (38) has a profile that is symmetrical about a vertical axis (39) of the cross section of the stopper.

8. Cylinder head gasket according to Claim 6 or 7, **characterized in that** the variation in thickness of the stopper is obtained by varying the thickness of the body (36).

9. Method of fixing the stopper (26) to the plate (24) serving as a packing piece in a cylinder head gasket according to any one of Claims 1 to 8, **characterized in that** the connection between the stopper (26) and the plate (24) is obtained by plastic deformation, more precisely by radial expansion of the said stopper (26), the latter having, before deformation, an outer diameter equal to or slightly less than the internal diameter of the plate (24) serving as a packing piece (24) and being disposed edge to edge with respect to the said plate.

10. Method of fixing the stopper according to Claim 9, **characterized in that** the fixing of the stopper onto the plate serving as a packing piece is obtained not only by radial expansion but also due to the formation of two protrusions (44) at the level of the stopper (26), on each side of the plate (24), thus jamming the said plate.

11. Method of fixing the stopper according to Claim 9 or 10, **characterized in that** the radial expansion necessary for the fixing of the stopper is produced at the time of production of the desired profile of the stopper, obtained by plastic deformation, in particular by stamping.
